# EUROPÄISCHE PATENTSCHRIFT

(11) **EP 1 993 698 B1**
(45) Veröffentlichungstag und Bekanntmachung des Hinweises auf die Patenterteilung: **07.09.2011**
(21) Anmeldenummer: 07703549.1
(22) Anmeldetag: 23.02.2007
(51) Int. Cl.: B01D 29/66, B01D 29/94

(54) **FILTERVORRICHTUNG UND FILTERVERFAHREN**
FILTER DEVICE AND FILTERING METHOD
DISPOSITIF DE FILTRATION ET PROCEDE DE FILTRATION

(30) Priorität: 09.03.2006 DE 102006010843
(43) Veröffentlichungstag der Anmeldung: 26.11.2008
(73) Patentinhaber: Dürr Ecoclean GmbH, 70794 Filderstadt (DE)
(72) Erfinder: KÄSKE, Egon, 52078 Aachen (DE)
(74) Vertreter: Hörner, Andreas
(86) Internationale Anmeldenummer: PCT/EP2007/001571
(87) Internationale Veröffentlichungsnummer: WO 2007/101562

(56) Entgegenhaltungen:
- DE-A1- 2 602 581
- DE-A1- 19 803 083
- DE-U1- 7 725 489
- US-A- 3 637 079

## Beschreibung

Die vorliegende Erfindung betrifft eine Filtervorrichtung zur Filtrierung eines Feststoffe enthaltenden fluiden Mediums, wobei die Filtervorrichtung ein Rückspülfilter und eine Spülleitung, durch welche während einer Rückspülphase rückgespültes Fluid aus dem Rückspülfilter einer Weiterbehandlungseinrichtung zuführbar ist, umfasst.

Solche Filtervorrichtungen sind aus dem Stand der Technik bekannt.

Bei bekannten Filtervorrichtungen dieser Art werden das während der Rückspülphase rückgespülte Fluid einerseits und in dem Rückspülfilter angesammelter Grobschmutz andererseits über getrennte Entsorgungsleitungen einem Auffangbehälter zugeführt.

Die DE-U-77 25 489 offenbart eine Filtervorrichtung zur Filtrierung eines Feststoffe enthaltenden fluiden Mediums, die ein Rückspülfilter mit einer Schlammablassöffnung, durch welche während einer Rückspülphase rückgespültes Fluid aus dem Rückspülfilter einer Weiterbehandlungseinrichtung zuführbar ist, umfasst.

Die DE-A-198 03 083 offenbart ein Rückspülfilter mit einem Grobschmutzauslass und einer Spülleitung, wobei der Grobschmutzauslass nicht mit der Spülleitung verbunden ist.

Die DE-A-26 02 581 offenbart ein Rückspülfilter mit einem Grobschmutzauslass und mit einer Spülleitung, wobei der Grobschmutzauslass einen Teil der Spülleitung bildet und der Grobschmutz nur während der Rückspülphase durch den Grobschmutzauslass in die Spülleitung gelangen kannn.

Der vorliegenden Erfindung liegt die Aufgabe zugrunde, eine Filtervorrichtung der eingangs genannten Art zu schaffen, bei welcher der Schmutzaustrag aus dem Rückspülfilter vereinfacht ist.

Diese Aufgabe wird durch eine Filtervorrichtung nach Anspruch 1 gelöst.

Bei der erfindungsgemäßen Lösung werden die Spülleitung für das während der Rückspülphase rückgespülte Fluid und der Grobschmutzauslass für den Austrag von Grobschmutz aus dem Rückspülfilter miteinander verbunden, so dass das rückgespülte Fluid und der Grobschmutz ab der Verbindungsstelle von Grobschmutzauslass und Spülleitung in einer gemeinsamen Leitung der Weiterbehandlungseinrichtung zugeführt werden. Dadurch, dass sich der Grobschmutz im Strömungsweg des während der Rückspülphase rückgespülten Fluids aus dem Rückspülfilter befindet, wird der angesammelte Grobschmutz in einfacher und wirksamer Weise zu der Weiterbehandlungseinrichtung transportiert, ohne dass hierfür die Zufuhr von zusätzlichem Fluid erforderlich ist.

Hierdurch wird der Fluidverbrauch der Filtervorrichtung deutlich verringert.

Die erfindungsgemäße Filtervorrichtung eignet sich insbesondere für den Einsatz in Reinigungsanlagen mit wässrigen Reinigern, Ölen und/oder Emulsionen.

Die in dem zu filtrierenden fluiden Medium enthaltenen Feststoffe können insbesondere ferromagnetische Feststoffe umfassen.

Bei der Erfindung ist vorgesehen, dass der Grobschmutzauslass mittels eines Grobschmutzventils verschließbar ist.

Ferner kann vorgesehen sein, dass der Grobschmutzauslass in einen im wesentlichen horizontal verlaufenden Abschnitt der Spülleitung mündet. Dieser Abschnitt bildet dann einen Grobschmutzsammelraum der Filtervorrichtung.

Um zu erreichen, dass immer dann eine Rückspülphase des Rückspülfilters eingeleitet wird, wenn sich eine bestimmte Menge von Grobschmutz in einem Grobschmutzsammelraum der Filtervorrichtung angesammelt hat, kann vorgesehen sein, dass die Filtervorrichtung einen Sensor umfasst, mittels welchem der Füllstand des Grobschmutzsammelraums in dem Grobschmutzauslass und/oder in der Spülleitung detektierbar ist.

Ein solcher Sensor kann insbesondere als ein Metallsensor ausgebildet sein.

Die Spülleitung kann ein Rückspülventil aufweisen, das stromaufwärts von der Einmündung des Grobschmutzauslasses in die Spülleitung angeordnet ist.

Die Spülleitung weist ein Austragventil auf, das stromabwärts von der Einmündung des Grobschmutzauslasses angeordnet ist und somit den Zugang zu der Weiterbehandlungseinrichtung sperrt oder freigibt.

Bei einer bevorzugten Ausgestaltung der Erfindung ist das Rückspülfilter als ein Automatikrückspülfilter ausgebildet, dessen Rückspülphase automatisch eingeleitet wird, wenn die Schmutzaufnahmekapazität eines Filterelements des Rückspülfilters erschöpft ist und/oder sich eine gewisse Menge an Grobschmutz in dem Grobschmutzsammelraum angesammelt hat.

Die Weiterbehandlungseinrichtung zur Weiterbehandlung und Aufbereitung des rückgespülten Fluids mit den darin enthaltenen Verunreinigungen, insbesondere dem darin enthaltenen Grobschmutz, kann insbesondere eine Sedimentationsvorrichtung und/oder einen Feststoffseparator umfassen.

Der vorliegenden Erfindung liegt die weitere Aufgabe zugrunde, ein Filterverfahren zur Filtrierung eines Feststoffe enthaltenden Mediums mittels eines Rückspülfilters zu schaffen, welches den Schmutzaustrag aus dem Rückspülfilter vereinfacht.

Diese Aufgabe wird erfindungsgemäß durch ein Filterverfahren zur Filtrierung eines Feststoffe enthaltenden Mediums mittels eines Rückspülfilters nach Anspruch 7 gelöst.

Dadurch, dass bei dem erfindungsgemäßen Verfahren der Grobschmutz zusammen mit dem rückgespülten Fluid aus dem Rückspülfilter zu der Weiterbehandlungseinrichtung gespült wird, wird der Grobschmutz in sehr effizienter Weise zu der Weiterbehandlungseinrichtung transportiert, ohne dass hierfür die Zufuhr eines zusätzlichen Fluids erforderlich ist.

Besondere Ausgestaltungen der erfindungsgemäßen Filterverfahrens sind Gegenstand der abhängigen Ansprüche 8 bis 11, deren Vorteile bereits vorstehend im Zusammenhang mit den besonderen Ausgestaltungen der erfindungsgemäßen Filtervorrichtung erläutert worden sind.

Weitere Merkmale und Vorteile der Erfindung sind Gegenstand der nachfolgenden Beschreibung und der zeichnerischen Darstellung eines Ausführungsbeispiels.

In den Zeichnungen zeigen:
- Fig. 1: eine schematische Darstellung einer Filtervorrichtung zur Filtrie- rung eines Feststoffe enthaltenden fluiden Mediums;
- Fig. 2: eine teilweise geschnittene Seitenansicht eines Rückspülfilters mit Grobschmutzauslass und einer Spülleitung der Filtervorrichtung aus Fig. 1, während einer Filtrierphase des Rückspülfilters;
- Fig. 3: eine der Fig. 2 entsprechende Darstellung des Rückspülfilters mit Grobschmutzauslass und der Spülleitung während einer Rückspül- phase des Rückspülfilters;
- Fig. 4: eine schematische, teilweise geschnittene Seitenansicht einer Sedimentationsvorrichtung der Filtervorrichtung aus Fig. 1, in einer Sedimentationsphase der Sedimentationsvorrichtung;
- Fig. 5: eine der Fig. 4 entsprechende Darstellung der Sedimentations- vorrichtung in einer Sediment- und Klarphasenaustragphase der Sedimentationsvorrichtung;
- Fig. 6: eine der Fig. 5 entsprechende Darstellung der Sedimentations- vorrichtung, am Ende der Klarphasenaustragphase der Sedimen- tationsvorrichtung; und
- Fig. 7: eine der Fig. 6 entsprechende Darstellung der Sedimentations- vorrichtung, in einer Siebspülphase der Sedimentationsvorrich- tung.

Gleiche oder funktional äquivalente Elemente sind in allen Figuren mit denselben Bezugszeichen bezeichnet.

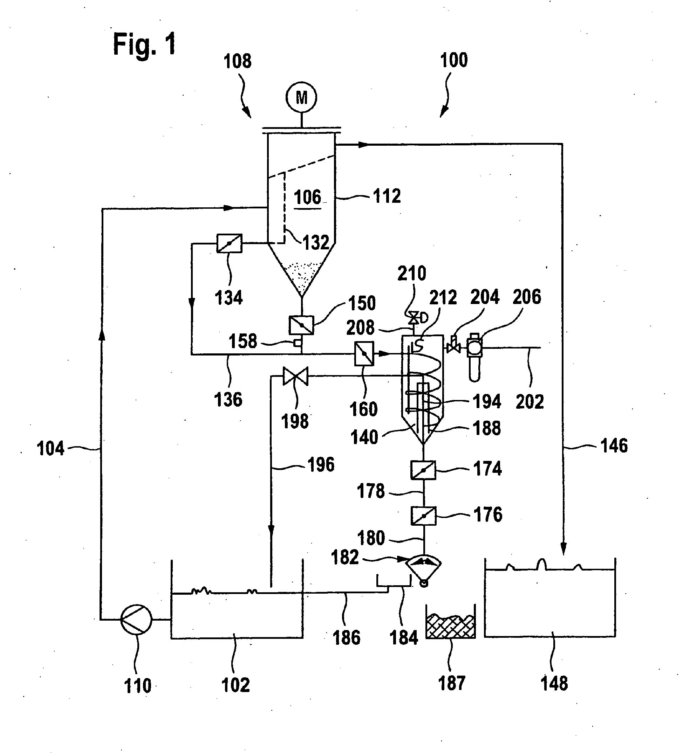

Eine in den Fig. 1 bis 7 dargestellte, als Ganzes mit 100 bezeichnete Filtervorrichtung zur Filtrierung eines Feststoffe enthaltenden fluiden Mediums, beispielsweise eines wässrigen Reinigers, eines Öls oder einer Emulsion, umfasst einen Schmutztank 102 zur Aufnahme des zu filtrierenden Mediums, der über eine Filter-Zuführleitung 104 mit einem schmutzseitigen Raum 106 eines Rückspülfilters 108 verbunden ist.

In der Filter-Zuführleitung 104 ist eine Filterpumpe 110 zum Fördern des zu filtrierenden Mediums aus dem Schmutztank 102 zu dem Rückspülfilter 108 angeordnet.

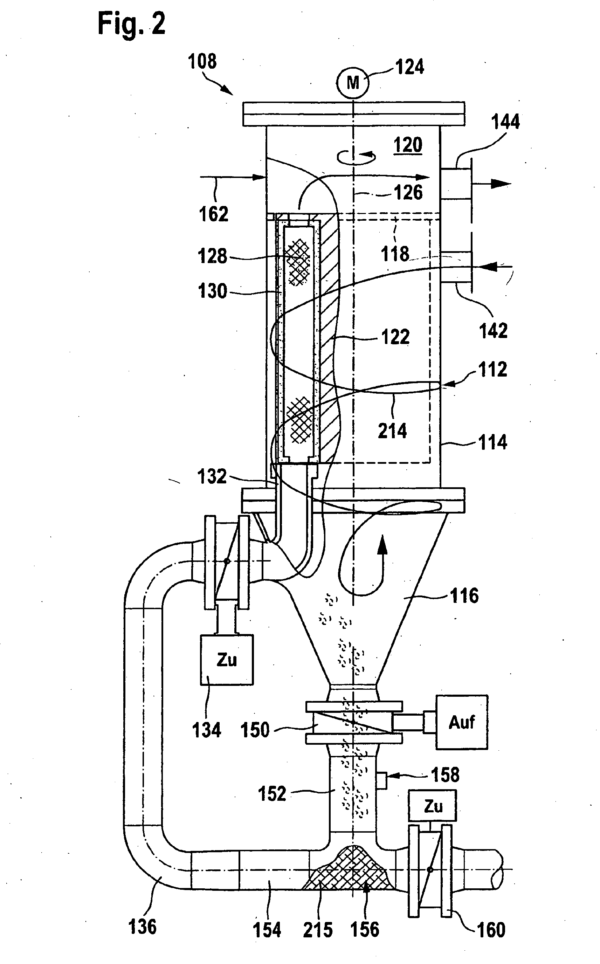

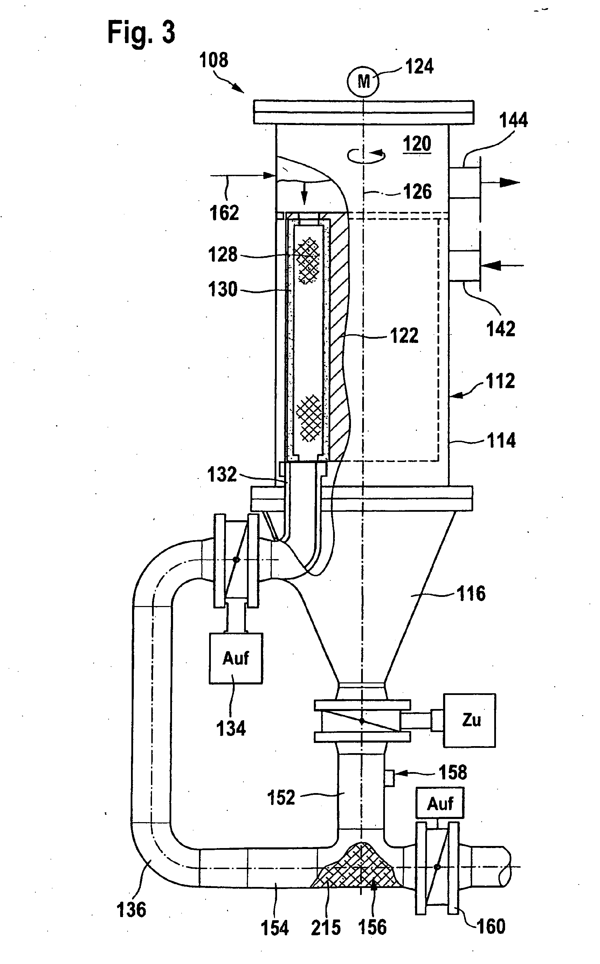

Der Aufbau des Rückspülfilters 108 ist im einzelnen aus den Figuren 2 und 3 zu ersehen.

Das Rückspülfilter 108 umfasst ein Filtergehäuse 112 mit einem im wesentlichen zylindrischen oberen Abschnitt 114 und einem sich nach unten an den oberen Abschnitt 114 anschließenden, sich nach unten konisch verjüngenden unteren Abschnitt 116.

Der obere Abschnitt 114 des Filtergehäuses 112 ist durch eine horizontale Trennwand 118 in einen oberhalb der Trennwand 118 liegenden filtratseitigen Raum 120 und den unterhalb der Trennwand 118 liegenden schmutzseitigen Raum 106 getrennt, wobei zu dem schmutzseitigen Raum 106 des Rückspülfilters 108 auch der Innenraum des unteren Abschnitts 116 des Filtergehäuses 112 zählt.

In dem Filtergehäuse 112 ist ferner ein Filtereinsatz 122 angeordnet, der mittels eines Motors 124 um eine vertikale Drehachse 126 drehbar ist und mehrere Filterelemente 128 enthält, die durch Drehung des Filtereinsatzes 122 um die Drehachse 126 nacheinander in eine Filterkammer 130 des Rückspülfilters 108 bewegbar sind.

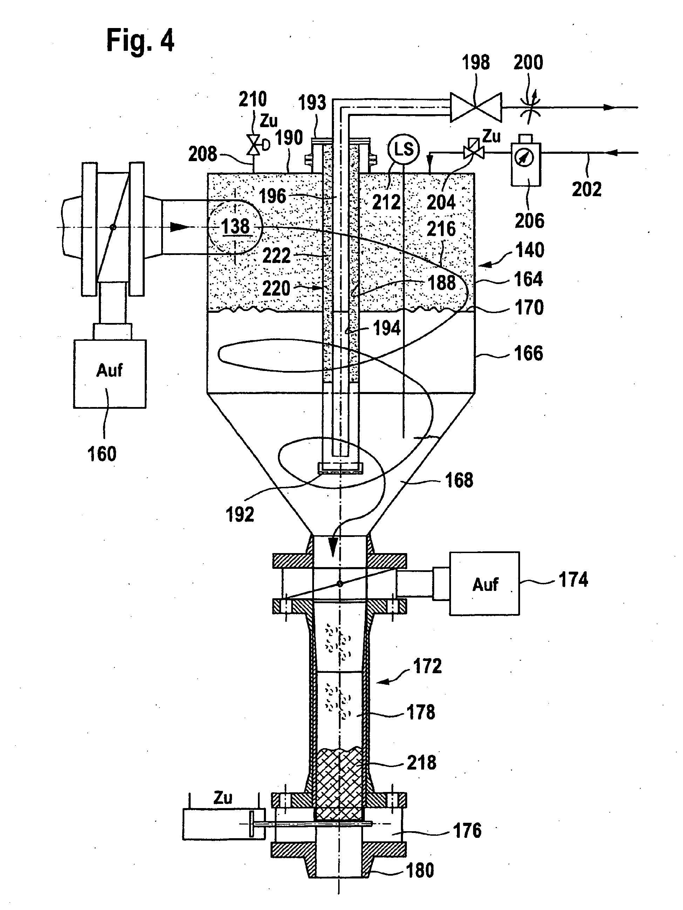

Das jeweils in der Filterkammer 130 befindliche Filterelement 128 ist filtratseitig mit dem filtratseitigen Raum 120 des Filtergehäuses 112 und schmutzseitig mit einer Rückspülleitung 132 verbunden, welche von der Filterkammer 130 zu einem Rückspülventil 134 führt. Das Rückspülventil 134 ist ferner an eine Spülleitung 136 angeschlossen, welche von dem Rückspülfilter 108 zu einem Fluideinlass 138 (siehe Fig. 4) eines Sedimentationsbehälters 140 führt.

Ein in den schmutzseitigen Raum 106 des Filtergehäuses 112 mündender schmutzseitiger Zulauf 142 des Rückspülfilters 108 ist an die Filter-Zuführleitung 104 angeschlossen.

Ein in den filtratseitigen Raum 120 des Filtergehäuses 112 mündender filtratseitiger Rücklauf 144 des Rückspülfilters 108 ist über eine Filter-Rücklaufleitung 146 (siehe Fig. 1) mit einem Saubertank 148 zur Aufnahme des filtrierten Mediums verbunden.

Ferner mündet in den filtratseitigen Raum 120 des Filtergehäuses 112 eine Druckluftzufuhr 162, welche mit einer (nicht dargestellten) Druckluftquelle verbunden ist.

Der konisch zulaufende untere Abschnitt 116 des Filtergehäuses 112 ist an seinem unteren Ende mittels eines Grobschmutzventils 150 verschließbar.

Das Grobschmutzventil 150 ist ferner über eine vertikal verlaufende Grobschmutzleitung 152 mit der Spülleitung 136 verbunden, wobei die als Grobschmutzauslass dienende Grobschmutzleitung 152 an ihrem unteren Ende in einen im wesentlichen horizontal verlaufenden Abschnitt 154 der Spülleitung 136 einmündet, so dass in der Spülleitung 136 im Bereich der Einmündung der Grobschmutzleitung 152 ein Grobschmutzsammelraum 156 gebildet ist.

An der Grobschmutzleitung 152 ist ein Metallsensor 158 zur Detektion des Füllstandes des Grobschmutzes in der Grobschmutzleitung 152 angeordnet. Stromabwärts von dem Grobschmutzsammelraum 156 ist in der Spülleitung 136 ein Rückspülungs-Austragventil 160 angeordnet, mittels welchem der Zugang zu dem in den Fig. 4 bis 7 im einzelnen dargestellten Sedimentationsbehälter 140 sperrbar ist.

Der Sedimentationsbehälter 140 umfasst ein Behältergehäuse 164 mit einem im wesentlichen zylindrischen oberen Abschnitt 166 und einem sich an den oberen Abschnitt 166 nach unten anschließenden, sich konisch nach unten verjüngenden unteren Abschnitt 168.

In den oberen Abschnitt 166 des Behältergehäuses 164 mündet die Spülleitung 136 über den Fluideinlass 138, und zwar oberhalb eines Fluidspiegels 170 in dem Sedimentationsbehälter 140.

Das untere Ende des konisch zulaufenden Abschnitts 168 des Sedimentationsbehälters 140 mündet in eine als Ganzes mit 172 bezeichnete Schleuseneinrichtung, welche ein an den Sedimentationsbehälter 140 angrenzendes oberes Schleusenventil 174, ein einen unteren Abschluss der Schleuseneinrichtung 172 bildendes unteres Schleusenventil 176 und eine zwischen dem oberen Schleusenventil 174 und dem unteren Schleusenventil 176 angeordnete Schleusenkammer 178 umfasst, deren Innenraum einen Sedimentsammelbereich bildet.

Das untere Schleusenventil 176 kann insbesondere als ein Schieberventil ausgebildet sein.

Das untere Schleusenventil 176 ist ferner über eine Sediment-Abführleitung 180 mit einem Einlass eines Feststoffseparators 182 (siehe Fig. 1) verbunden. Der Feststoffseparator 182 dient dazu, das in dem aus der Schleusenkammer 178 stammenden Sediment enthaltene restliche fluide Medium von dem Feststoffanteil des Sediments zu trennen.

Der Feststoffseparator 182 kann insbesondere so aufgebaut sein und funktionieren wie der in der WO 2004/041438 A1 beschriebene magnetische Feststoffseparator.

Von einem Fluidauslass 184 des Feststoffseparators 182 führt eine Restflüssigkeits-Rücklaufleitung 186 zu dem Schmutztank 102.

Der in dem Feststoffseparator 182 von der Restflüssigkeit abgetrennte Feststoffanteil des Sediments aus der Schleusenkammer 178 gelangt in einen Feststoffsammelbehälter 187.

In dem Sedimentationsbehälter 140 ist ferner im wesentlichen mittig ein Spülrohr 188 angeordnet, welches sich längs einer im wesentlichen vertikalen Rohrachse durch einen Deckel 190 des Sedimentationsbehälters 140 hindurch in dessen Innenraum bis in den unteren Abschnitt 168 des Behältergehäuses 164 hinein erstreckt und dort an einer unterhalb des Fluidspiegels 170 gelegenen Stelle in den Innenraum des Sedimentationsbehälters 140 mündet.

Die Mündung des Spülrohrs 188 ist an dessen unterem Ende durch ein Sieb 192 verschlossen.

Das obere Ende des Spülrohrs 188 ist durch eine Abdichtplatte 193 verschlossen.

Innerhalb des Spülrohrs 188 verläuft ein koaxial zu dem Spülrohr 188 angeordneter Anfangsabschnitt 194 einer Klarphasen-Rückführleitung 196, welche die Abdichtplatte 193 durchsetzt und von dem Sedimentationsbehälter 140 zu dem Schmutztank 102 führt (siehe Fig. 1).

In der Klarphasen-Rückführleitung 196 sind ein Sperrventil 198 und ein Durchflussregler 200 angeordnet.

In den oberhalb des Fluidspiegels 170 gelegenen Teil des Innenraums des Sedimentationsbehälters 140 mündet ferner eine Druckluft-Zuführleitung 202, in welcher ein Druckluftventil 204 und ein Druckregler 206 angeordnet sind.

Die Druckluft-Zuführleitung 202 ist mit einer (nicht dargestellten) Druckluftquelle verbunden.

Ferner mündet in den oberhalb des Fluidspiegels 170 gelegenen Teil des Innenraums des Sedimentationsbehälters 140 eine Belüftungsleitung 208, in welcher ein Belüftungsventil 210 angeordnet ist, so dass der Innenraum des Sedimentationsbehälters 140 bei geöffnetem Belüftungsventil 210 mit Umgebungsluft belüftbar ist.

Ferner ist der Sedimentationsbehälter 140 mit einer Niveausonde 212 zur Detektion eines Niveaus des Fluidspiegels 170 innerhalb des Sedimentationsbehälters 140 versehen.

Die vorstehend beschriebene Filtervorrichtung 100 funktioniert wie folgt:

In dem Schmutztank 102 wird das mit abzufiltrierenden Feststoffen vermengte fluide Medium, beispielsweise eine wässerige Reinigungsflüssigkeit, ein Öl oder eine Emulsion, gesammelt.

Aus dem Schmutztank 102 wird das zu filtrierende Medium über die Filterpumpe 110 dem schmutzseitigen Raum 106 des Rückspülfilters 108 zugeführt.

Wie aus Fig. 2 zu ersehen ist, verläuft der Zulauf 142 des Rückspülfilters 108 im wesentlichen tangential zu der inneren Begrenzungswand des Filtergehäuses 112, so dass das zu filtrierende Medium sich in einer wendelförmigen Bahn 214 durch den Innenraum des Filtergehäuses 112 bewegt.

Beim Eintritt des zu filtrierenden Mediums in das Rückspülfilter 108 sinken schwere Schmutzpartikel nach unten durch das geöffnete Grobschmutzventil 150 und die Grobschmutzleitung 152 in den Grobschmutzsammelraum 156 in der Spülleitung 136, wo sich infolgedessen während der Filtrierphase des Rückspülfilters 108 eine Grobschmutzansammlung 215 bildet (siehe Fig. 2).

Während dieser in Fig. 2 dargestellten Filtrierphase des Rückspülfilters 108 sind das Rückspülventil 134 und das Rückspülungs-Austragventil 160 geschlossen.

Das zu filtrierende Medium wird aus dem schmutzseitigen Raum 106 des Rückspülfilters 108 durch das in der Filterkammer 130 befindliche Filterelement 128 dem filtratseitigen Raum 120 des Rückspülfilters 108 zugeführt.

Aus dem filtratseitigen Raum 120 des Rückspülfilters 108 gelangt das Filtrat über die Filter-Rücklaufleitung 146 in den Saubertank 148.

Beim Passieren des Filterelements 128 werden die feineren Feststoffpartikel entsprechend der Filterfeinheit des Filterelements 128 zwischen der Schmutzseite und der Sauberseite des Filterelements 128 zurückgehalten.

Wenn die maximale Schmutzaufnahmekapazität des Filterelements 128 erreicht ist, wird eine in Fig. 3 dargestellte Rückspülphase des Rückspülfilters 108 zur Regeneration des Filterelements 128, d.h. eine druckluftunterstützte Rückspülung des Filtermediums von der Sauberseite zur Schmutzseite hin, eingeleitet.

Für diesen Rückspülvorgang wird das Grobschmutzventil 150 geschlossen, und das Rückspülungs-Austragventil 160 in der Spülleitung 136 wird geöffnet.

Anschließend wird das Rückspülventil 134 kurzzeitig geöffnet, und der filtratseitige Raum 120 des Rückspülfilters 108 wird mittels der Druckluftzufuhr 162 mit Druckluft beaufschlagt, so dass Filtrat aus dem filtratseitigen Raum 120 des Rückspülfilters 108 druckluftunterstützt durch das Filtermedium des Filterelements 128 zurück in den schmutzseitigen Raum 106 des Rückspülfilters 108, von dort in die Rückspülleitung 132 und von dort durch das geöffnete Rückspülventil 134 in die Spülleitung 136 gespült wird.

Zusammen mit dem als Spülmedium verwendeten Filtrat gelangen auch die bei der Rückspülung von dem Filterelement 128 abgelösten Verunreinigungen in die Spülleitung 136.

Das rückgespülte Fluid gelangt auch durch den Grobschmutzsammelraum 156 und spült den dort angesammelten Grobschmutz durch das geöffnete Rückspülungs-Austragventil 160 in den Sedimentationsbehälter 140.

Das Rückspütungs-Austragventil 160 ist während jeder Rückspülphase während eines Zeitraums von beispielsweise ungefähr 1 s bis 3 s geöffnet.

Die Rückspülphase des Rückspülfilters 108 durch Schließen des Rückspülventils 134 und des Rückspülungs-Austragventils 160 sowie durch erneutes Öffnen des Grobschmutzventils 150 beendet, worauf eine neue Filtrierphase des Rückspülfilters 108 beginnt.

Die Rückspülphase des Rückspülfilters 108 kann eingeleitet werden, wenn mittels des Metallsensors 158 an der Grobschmutzleitung 152 ein vorgegebener maximaler Füllstand des Grobschmutzes in der Grobschmutzleitung 152 detektiert wird.

Alternativ oder ergänzend hierzu kann eine Rückspülphase des Rückspülfilters 108 eingeleitet werden, wenn der Differenzdruck zwischen der Schmutzseite und der Sauberseite des Filterelements 128 einen vorgegebenen Maximalwert überschreitet.

Die Aufbereitung des in der Rückspülphase rückgespülten Fluids erfolgt in dem in den Fig. 4 bis 7 dargestellten Sedimentationsbehälter 140.

Wie aus Fig. 4 zu ersehen ist, ist der Fluideinlass 138 im wesentlichen tangential zu der Innenwand des Behältergehäuses 164 ausgerichtet, so dass das rückgespülte Fluid in einer wendelförmigen Bahn 216 in den Innenraum des Sedimentationsbehälters 140 eintritt.

In dem Sedimentationsbehälter 140 sedimentieren die in dem rückgespülten Fluid enthaltenen Feststoffe (Grobschmutz und aus dem Filterelement 128 rückgespülte Verunreinigungen) und gelangen durch das geöffnete obere Schleusenventil 174 in die Schleusenkammer 178, die nach unten durch das geschlossene untere Schleusenventil 176 verschlossen ist.

In der Schleusenkammer 178 bildet sich eine Sedimentansammlung 218.

Somit bilden der Sedimentationsbehälter 140 und die Schleuseneinrichtung 172 zusammen eine Sedimentationsvorrichtung der Filtervorrichtung 100.

Während dieser in Fig. 4 dargestellten Sedimentierphase sind das Sperrventil 198 in der Klarphasen-Rückführleitung 196, das Druckluftventil 204 in der Druckluft-Zuführleitung 202 und das Belüftungsventil 210 in der Belüftungsleitung 208 geschlossen.

Durch die Zufuhr von rückgespültem Fluid aus der Spülleitung 136 steigt der Fluidspiegel 170 in dem Sedimentationsbehälter 140 während dieser Sedimentierphase an.

Nach Ablauf einer vorgegebenen Sedimentationszeit wird das obere Schleusenventil 174 geschlossen.

Anschließend wird der Innenraum des Sedimentationsbehälters 140 durch Öffnen des Druckluftventils 204 kontrolliert mit Druckluft bei einem Überdruck von beispielsweise ungefähr 0,3 bar beaufschlagt.

Ferner wird das Sperrventil 198 in der Klarphasen-Rückführleitung 196 geöffnet, so dass die im Innenraum des Sedimentationsbehälters 140 enthaltene feststofffreie Flüssigkeit (Klarphase) durch das Sieb 192 am unteren Ende des Spülrohrs 188 in die Klarphasen-Rückführleitung 196 gedrückt und über die Klarphasen-Rückführleitung 196 in den Schmutztank 102 zurückgeführt wird.

Dabei steigt auch der Klarphasen-Pegel in der nach außen durch das Spülrohr 188 und nach innen durch den Anfangsabschnitt 194 der Klarphasen-Rückführleitung 196 begrenzten Luftkissenkammer 220 an, so dass das den oberen Bereich der Luftkissenkammer 220 ausfüllende Luftkissen 222 komprimiert wird, bis darin der Überdruck von beispielsweise ungefähr 0,3 bar erreicht ist, mit welchem die Druckluft dem Innenraum des Sedimentationsbehälters 140 zugeführt wird.

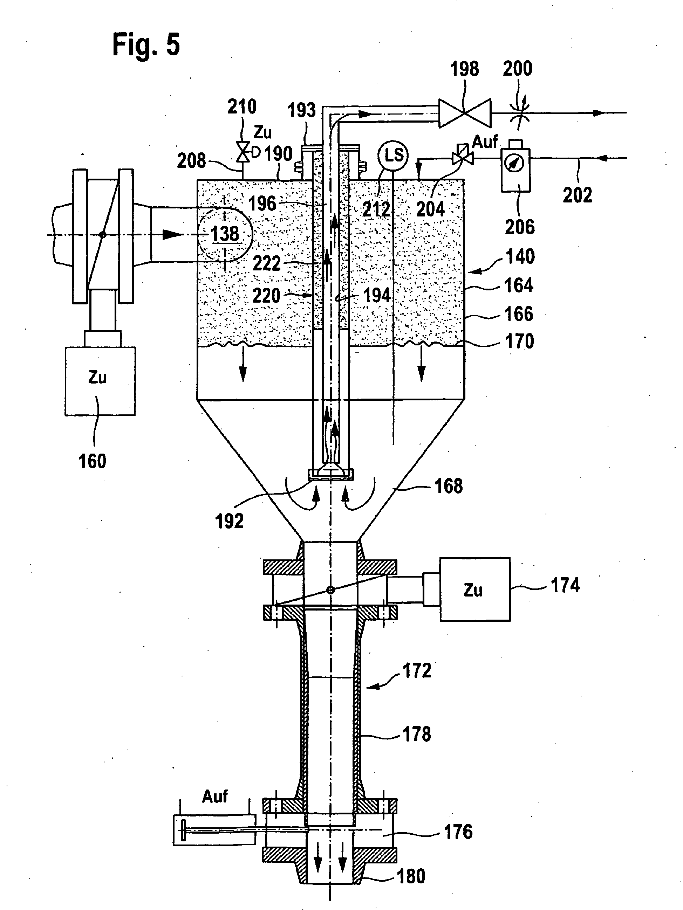

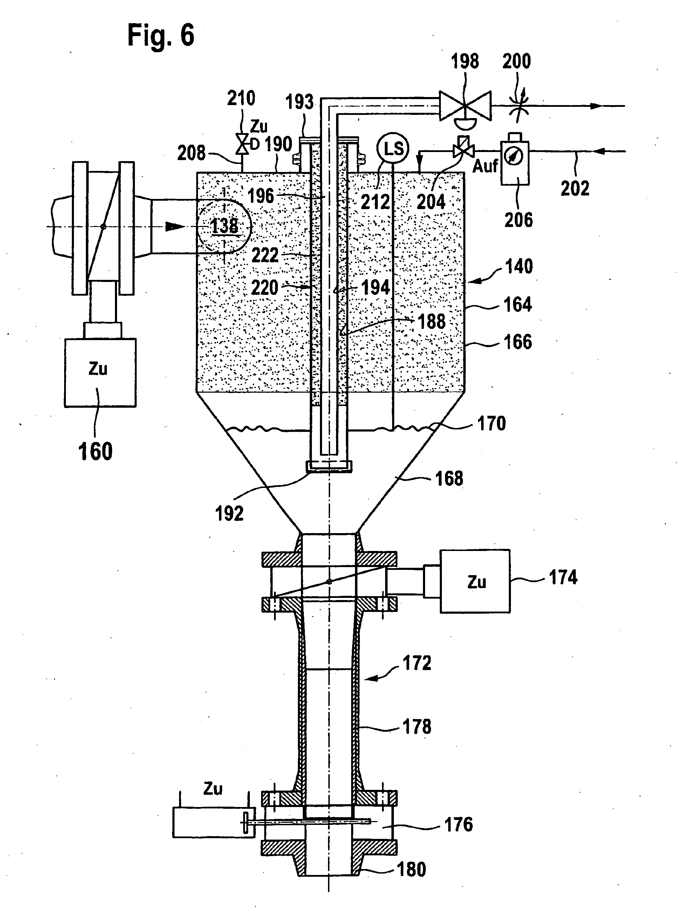

Während dieser Klarphasen-Austragphase, deren Beginn in Fig. 5 und deren Ende in Fig. 6 dargestellt ist, sinkt der Fluidspiegel 170 im Sedimentationsbehälter 140 ab, bis das in Fig. 6 dargestellte vorgegebene Minimalniveau erreicht ist, was mittels der Niveausonde 212 detektiert wird.

Während dieser Klarphasen-Austragphase wird die Schleusenkammer 178 durch Öffnen des unteren Schleusenventils 176 entleert, so dass das in der Schleusenkammer 178 angesammelte Sediment, welches einen Feststoffanteil und Restflüssigkeit enthält, durch die Sedimentabführleitung 180 in den Feststoffseparator 182 gelangt.

Nach Entleerung der Schleusenkammer 178 wird das untere Schleusenventil 176 wieder geschlossen (siehe Fig. 6).

In dem Feststoffseparator 182 wird der Feststoffanteil des Sediments von der Restflüssigkeit getrennt. Die Restflüssigkeit wird über die Restflüssigkeits-Rücklaufleitung 186 dem Schmutztank 102 zugeführt. Der Feststoffanteil wird dem Feststoffsammelbehälter 187 und von dort einer Weiterbearbeitung oder Entsorgung zugeführt.

Nach Erreichen des Minimalniveaus des Fluidspiegels 170 in dem Sedimentationsbehälter 140 werden das Druckluftventil 204 in der Druckluft-Zuführleitung 202 und das Sperrventil 198 in der Klarphasen-Rückführleitung 196 geschlossen.

Anschließend werden das Belüftungsventil 210 und das obere Schleusenventil 174 gleichzeitig geöffnet, so dass die im unteren Bereich der Luftkissenkammer 220 stehende Flüssigkeitssäule schlagartig entlastet wird.

Das im oberen Bereich der Luftkissenkammer 220 vorhandene komprimierte Luftkissen 222 expandiert daher schlagartig nach unten, wodurch die im unteren Bereich des Spülrohrs 188 befindliche Flüssigkeit durch das Sieb 192 in den unteren Abschnitt 168 des Behältergehäuses 164 gedrückt wird und dabei an dem Sieb 192 angesammelte Verunreinigungen von dem Sieb 192 löst und mit sich führt.

Die auf diese Weise vom Sieb 192 abgelösten Verunreinigungen sinken nach unten durch das geöffnete obere Schleusenventil 174 in die Schleusenkammer 178.

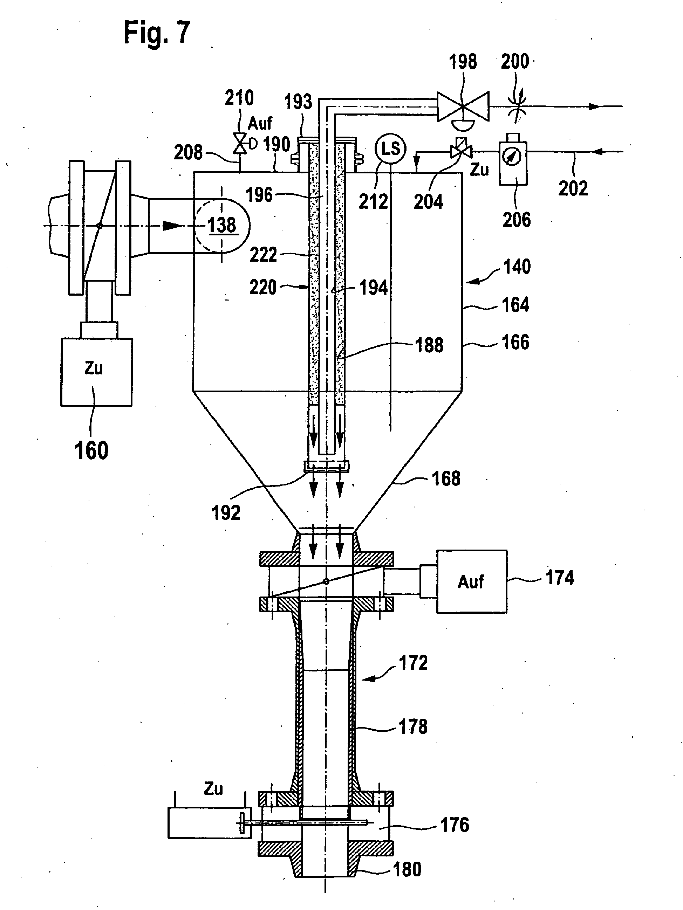

Damit ist die in Fig. 7 dargestellte Siebreinigungsphase abgeschlossen.

Eine erneute Sedimentierphase des Sedimentationsbehälters 140 beginnt mit dem nächsten Öffnen des Rückspülungs-Austragventils 160 (siehe Fig. 4), d.h. mit der nächsten Rückspülphase des Rückspülfilters 108.

Bei einer alternativen Ausgestaltung der vorstehend beschriebenen Filtervorrichtung 100 führt die Klarphasen-Rückführleitung 196 von dem Sedimentationsbehälter 140 aus nicht zu dem Schmutztank 102, sondern zu dem Saubertank 148.

Im übrigen stimmt diese alternative Ausführungsform der Filtervorrichtung 100 hinsichtlich Aufbau und Funktion mit der vorstehend beschriebenen Filtervorrichtung 100 überein.

## Patentansprüche

1. Filtervorrichtung zur Filtrierung eines Feststoffe enthaltenden fluiden Mediums, umfassend ein Rückspülfilter (108) und eine Spülleitung (136), durch welche während einer Rückspülphase rückgespültes Fluid aus dem Rückspülfilter (108) einer Weiterbehandlungseinrichtung zuführbar ist,
**dadurch gekennzeichnet,**
**dass** das Rückspülfilter (108) einen Grobschmutzauslass aufweist, der nicht Teil der Spülleitung (136) ist und mit der Spülleitung (136) verbunden ist, so dass während einer Filtrierphase des Rückspülfilters (108) Grobschmutz durch den Grobschmutzauslass in die Spülleitung (136) gelangen kann und durch den Grobschmutzauslass in die Spülleitung (136) gelangter Grobschmutz (215) während der Rückspülphase zusammen mit dem rückgespülten Fluid der Weiterbehandlungseinrichtung zuführbar ist,
wobei der Grobschmutzauslass mittels eines Grobschmutzventils (150) verschließbar ist und die Spülleitung (136) ein Austragventil (160) aufweist, das stromabwärts von der Einmündung des Grobschmutzauslasses angeordnet ist.

2. Filtervorrichtung nach Anspruch 1, **dadurch gekennzeichnet, dass** der Grobschmutzauslass in einen im Wesentlichen horizontal verlaufenden Abschnitt (154) der Spülleitung (136) mündet.

3. Filtervorrichtung nach einem der Ansprüche 1 oder 2, **dadurch gekennzeichnet, dass** die Filtervorrichtung (100) einen Sensor (158) umfasst, mittels welchem der Füllstand eines Grobschmutzsammelraums (156) in dem Grobschmutzauslass und/oder in der Spülleitung (136) detektierbar ist.

4. Filtervorrichtung nach Anspruch 3, **dadurch gekennzeichnet, dass** der Sensor als ein Metallsensor (158) ausgebildet ist.

5. Filtervorrichtung nach einem der Ansprüche 1 bis 4, **dadurch gekennzeichnet, dass** die Spülleitung (136) ein Rückspülventil (134) aufweist, das stromaufwärts von der Einmündung des Grobschmutzauslasses angeordnet ist.

6. Filtervorrichtung nach einem der Ansprüche 1 bis 5, **dadurch gekennzeichnet, dass** das Rückspülfilter (108) als ein Automatikrückspülfilter ausgebildet ist.

7. Filterverfahren zur Filtrierung eines Feststoffe enthaltenden Mediums mittels eines Rückspülfilters (108), umfassend folgende Verfahrensschritte:
- Austragen von Grobschmutz aus dem Rückspülfilter (108) durch einen Grobschmutzauslass in eine Spülleitung (136) während einer Filtrierphase des Rückspülfilters (108), wobei der Grobschmutzauslass nicht Teil der Spülleitung (136) ist und mit der Spülleitung (136) verbunden ist;
- Rückspülen des Rückspülfilters (108) und Zuführen von rückgespültem Fluid aus dem Rückspülfilter (108) zusammen mit in der Spülleitung (136) angesammeltem Grobschmutz zu einer Weiterbehandlungseinrichtung während einer Rückspülphase des Rückspülfilters (108),
wobei der Grobschmutzauslass während der Rückspülphase mittels eines Grobschmutzventils (150) verschlossen wird und
die Spülleitung (136) während der Filtrierphase mittels eines stromabwärts von einer Einmündung des Grobschmutzauslasses in die Spülleitung (136) angeordneten Austragventils (160) verschlossen wird.

8. Filterverfahren nach Anspruch 7, **dadurch gekennzeichnet, dass** ein Füllstand eines Grobschmutzsammelraums (156) in dem Grobschmutzauslass und/oder in der Spülleitung (136) mittels eines Sensors detektiert wird.

9. Filterverfahren nach Anspruch 8, **dadurch gekennzeichnet, dass** der Füllstand des Grobschmutzsammelraums (156) mittels eines Metallsensors (158) detektiert wird.

10. Filterverfahren nach einem der Ansprüche 7 bis 9, **dadurch gekennzeichnet, dass** die Spülleitung (136) während der Filtrierphase mittels eines stromaufwärts von einer Einmündung des Grobschmutzauslasses in die Spülleitung (136) angeordneten Rückspülventils (134) verschlossen wird.

11. Filterverfahren nach einem der Ansprüche 7 bis 10, **dadurch gekennzeichnet, dass** das Rückspülfilter (108) automatisch rückgespült wird, wenn ein vorgegebener Differenzdruck zwischen der Schmutzseite und der Sauberseite des Rückspülfilters (108) überschritten und/oder ein vorgegebener maximaler Füllstand eines Grobschmutzsammelraums (156) in der Spülleitung (136) detektiert wird.

## Claims

1. Filter device for filtering a fluid medium containing solids, comprising a back-flushing filter (108) and a flushing line (136), through which fluid back-flushed during a back-flushing phase from the back-flushing filter is suppliable to a further treatment arrangement **characterised in that** the back-flushing filter (108) has a coarse dirt outlet, which is not part of the flushing line (136) and is connected to the flushing line (136), so that, during a filtering phase of the back-flushing filter (108), coarse dirt can enter the flushing line (136) through the coarse dirt outlet and coarse dirt (215), which has arrived in the flushing line (136) through the coarse dirt outlet, is suppliable, during the back-flushing phase, together with the back-flushed fluid, to the further treatment arrangement wherein the coarse dirt outlet is closable by means of a coarse dirt valve (150) and the flushing line (136) has a discharge valve (160), which is arranged downstream of the mouth of the coarse dirt outlet.

2. Filter device according to claim 1, **characterised in that** the coarse dirt outlet opens into a substantially horizontally extending portion (154) of the flushing line (136).

3. Filter device according to either of claims 1 or 2, **characterised in that** the filter device (100) comprises a sensor (158), by means of which the filling level of a coarse dirt collecting chamber (156) in the coarse dirt outlet and/or in the flushing line (136) is detectable.

4. Filter device according to claim 3, **characterised in that** the sensor is configured as a metal sensor (158).

5. Filter device according to any one of claims 1 to 4, **characterised in that** the flushing line (136) has a back-flushing valve (134), which is arranged upstream of the mouth of the coarse dirt outlet.

6. Filter device according to any one of claims 1 to 5, **characterised in that** the back-flushing filter (108) is configured as an automatic back-flushing filter.

7. Filter method for filtering a medium containing solids by means of a back-flushing filter (108), comprising the following method steps:
- discharging coarse dirt from the back-flushing filter (108) through a coarse dirt outlet into a flushing line (136) during a filtering phase of the back-flushing filter (108), wherein the coarse dirt outlet is not part of the flushing line (136) and is connected to the flushing line (136);
- back-flushing the back-flushing filter (108) and supplying back-flushed fluid from the back-flushing filter (108) together with coarse dirt, which has accumulated in the flushing line (136), to a further treatment arrangement during a back-flushing phase of the back-flushing filter (108),
wherein the coarse dirt outlet is closed by means of a coarse dirt valve (150) during the back-flushing phase and the flushing line (136) is closed during the filtering phase by means of a discharge valve (160) arranged downstream of a mouth of the coarse dirt outlet into the flushing line (136).

8. Filter method according to claim 7, **characterised in that** a filling level of a coarse dirt collecting chamber (156) in the coarse dirt outlet and/or in the flushing line (136) is detected by means of a sensor.

9. Filter method according to claim 8, **characterised in that** the filling level of the coarse dirt collecting chamber (156) is detected by means of a metal sensor (158).

10. Filter method according to any one of claims 7 to 9, **characterised in that** the flushing line (136) is closed during the filtering phase by means of a back-flushing valve (134) arranged upstream of a mouth of the coarse dirt outlet into the flushing line (136).

11. Filter method according to any one of claims 7 to 10, **characterised in that** the back-flushing filter (108) is back-flushed automatically if a predetermined differential pressure between the dirt side and the clean side of the back-flushing filter (108) is exceeded and/or a predetermined maximum filling level of a coarse dirt collecting chamber (156) in the flushing line (136) is detected.

## Revendications

1. Dispositif de filtrage pour filtrer un médium fluide comportant des matériaux solides, lequel dispositif comprend un filtre de rinçage à contre-courant (108) et une conduite de rinçage (136) à travers laquelle, pendant une phase de rinçage à contre-courant, un fluide de rinçage à contre-courant peut être amené à partir du filtre de rinçage à contre-courant (108) vers une installation de retraitement, **caractérisé en ce que**, le filtre de rinçage à contre-courant (108) comporte une sortie pour les impuretés grossières qui ne fait pas partie de la conduite de rinçage (136) et est reliée à la conduite de rinçage (136) pour que les impuretés grossières puissent arriver dans la conduite de rinçage (136) à travers la sortie pour les impuretés grossières pendant une phase de filtrage du filtre de rinçage à contre-courant (108) et que des impuretés grossières (215) introduites dans la conduite de rinçage (136) à travers la sortie pour les impuretés grossières puissent être amenées, ensemble avec le fluide à contre-courant, vers l'installation de retraitement pendant la phase de rinçage à contre-courant ; ladite sortie pour les impuretés grossières pouvant être fermée au moyen d'une soupape (150) pour les impuretés grossières et la conduite de rinçage (136) comportant une soupape de sortie (160) qui est disposée en aval par rapport à l'orifice de la sortie pour les impuretés grossières .

2. Dispositif de filtrage selon la revendication 1, **caractérisé en ce que** la sortie pour les impuretés grossières débouche dans un tronçon (154) de la conduite de rinçage (136), lequel tronçon s'étend de manière essentiellement horizontale.

3. Dispositif de filtrage selon une des revendications 1 ou 2, **caractérisé en ce que** le dispositif de filtrage (100) comprend un capteur (158) au moyen duquel on peut détecter le niveau de remplissage d'une chambre de collecte de impuretés grossières (156) dans la sortie destinée aux impuretés grossières et/ou dans la conduite de rinçage (136).

4. Dispositif de filtrage selon la revendication 3, **caractérisé en ce que** le capteur est réalisé sous la forme d'un capteur qui détecte le métal (158).

5. Dispositif de filtrage selon une des revendications 1 à 4, **caractérisé en ce que** la conduite de rinçage (136) comporte une soupape de rinçage à contre-courant (134) qui est disposée en aval par rapport à l'orifice de la sortie pour les impuretés grossières .

6. Dispositif de filtrage selon une des revendications 1 à 5, **caractérisé en ce que** le filtre à contre-courant (108) est réalisé sous la forme d'un filtre de rinçage de rinçage à contre-courant automatique.

7. Procédé de filtrage pour filtrer un médium comportant des matières solides au moyen d'un filtre de rinçage à contre-courant (108), lequel procédé de filtrage comprend les étapes de procédé suivantes :
- la sortie des impuretés grossières du filtre de rinçage à contre-courant (108) à travers une sortie pour les impuretés grossières dans une conduite de rinçage (136) pendant une phase de filtrage du filtre de rinçage à contre-courant (108) ; la sortie pour les impuretés grossières ne faisant pas partie de la conduite de rinçage (136) et étant reliée avec la conduite de rinçage (136) ;
- rinçage retour du filtre de rinçage à contre-courant (108) et amenée du fluide de rinçage à contre-courant hors du filtre de rinçage à contre-courant (108), ensemble avec les impuretés grossières collectées dans la conduite de rinçage (136) vers une installation de retraitement pendant une phase de rinçage à contre-courant du filtre de rinçage à contre-courant (108),
où la sortie pour les impuretés grossières est fermée au moyen d'une soupape pour les impuretés grossières pendant la phase à contre-courant, et où la conduite de rinçage (136) est fermée pendant la phase de filtrage au moyen d'une soupape de sortie (160) disposée en aval d'un orifice de la sortie pour les impuretés grossières dans la conduite de rinçage (136).

8. Procédé de filtrage selon la revendication 7, **caractérisé en ce que** le niveau de remplissage d'une chambre de collecte de impuretés grossières (156) dans la sortie pour les impuretés grossières et/ou dans la conduite de rinçage (136) est détecté au moyen d'un capteur.

9. Procédé de filtrage selon la revendication 8, **caractérisé en ce que** le niveau de remplissage de la chambre de collecte des impuretés grossières (156) est détecté au moyen d'un capteur qui détecte le métal (158).

10. Procédé de filtrage selon une des revendications 7 à 9, **caractérisé en ce que** la conduite de rinçage (136) est fermée pendant la phase de filtrage au moyen d'une soupape de rinçage à contre-courant (134) disposée en aval par rapport à un orifice de la sortie pour les impuretés grossières dans la conduite de rinçage (136).

11. Procédé de filtrage selon une des revendications 7 à 10, **caractérisé en ce que** le filtre de rinçage à contre-courant (108) est rincé en retour de façon automatique lorsqu'une pression différentielle prédéterminée entre le côté sale et le côté propre du filtre de rinçage à contre-courant est dépassée et/ou lorsqu'un niveau de remplissage maximal prédéterminé d'une chambre de collecte pour les impuretés grossières (156) est détecté dans la conduite de rinçage (136).
